# EUROPÄISCHE PATENTSCHRIFT

(11) **EP 1 919 642 B1**
(45) Veröffentlichungstag und Bekanntmachung des Hinweises auf die Patenterteilung: **17.07.2013**
(21) Anmeldenummer: 06776381.3
(22) Anmeldetag: 24.07.2006
(51) Int. Cl.: B21D 51/26

(54) **VERFAHREN ZUR HERSTELLUNG VON BLECHGEBINDEN**
METHOD FOR PRODUCING A SHEET METAL CONTAINER
PROCEDE POUR REALISER DES RÉCIPIENTS EN TÔLE

(30) Priorität: 01.08.2005 DE 102005038521
(43) Veröffentlichungstag der Anmeldung: 14.05.2008
(73) Patentinhaber: Huber Packaging Group GmbH, 74613 Öhringen (DE)
(72) Erfinder: SCHNEIDER, Peter, 74632 Neuenstein (DE); BALDASSI, Marco, 74629 Pfedelbach (DE)
(74) Vertreter: Gahlert, Stefan
(86) Internationale Anmeldenummer: PCT/EP2006/007280
(87) Internationale Veröffentlichungsnummer: WO 2007/014668

(56) Entgegenhaltungen:
- WO-A2-00/53348
- WO-A2-01/47653
- FR-A1- 2 842 445
- GB-A- 1 169 524

## Beschreibung

Die Erfindung betrifft ein Verfahren zur Herstellung von Blechgebinden gemäß dem Oberbegriff des Patentanspruchs 1. Solch ein Verfahren ist aus der WO-A-0053348 bekannt.

In der WO 01/47653 A2 handelt es sich um eine Anlage mit Einrichtungen zur Herstellung eines rohrförmigen Blechgebindes aus einem Halbzeug, zum Ausbilden einer gewünschten Querschnittsform bei dem rohrförmigen Blechgebinde, zum Bördeln, Falzen und Rollen des rohrförmigen Blechgebindes sowie zur Befestigung eines Behälterbodens an dem Blechgebinde.

Mit dem bekannten Verfahren wird es ermöglicht, verschiedene Blechgebinde, die sich hinsichtlich ihrer Größe, ihres Querschnitts und ihrer Boden- bzw. Deckelkonfiguration unterscheiden, auf einer Fertigungslinie herzustellen. Zur Anpassung an verschiedene Gebindeformen ist es jedoch erforderlich, die Anlage zeitaufwendig umzurüsten. Hierzu ist vorgesehen, verschiedene Elemente der Anlage, wie z.B. Greifmittel und Formhülsen, auszutauschen bzw. zu verstellen und zu justieren. Diese Tausch-, Verstell- bzw. Justierprozesse setzen jeweils den Stillstand der Anlage voraus. Während dieser Rüstzeit kann nicht produziert werden.

Bei der Herstellung von Blechgebinden aus Feinstblech, insbesondere aus Weißblech, ist nach dem heutigen Stand der Technik für jede besondere Art von Gebinde, wie etwa Hobbocks, Eimer, Kanister und Dosen, sowie für jede Größe eines Gebindes, eine aufwändige Umrüstung der Fertigungslinie notwendig.

Im Stand der Technik bekannte Fertigungslinien zur Herstellung von Blechgebinden aus Weißblech weisen eine Mehrzahl von Stationen hintereinander auf, die für diese Bearbeitungsschritte ausgelegt sind und die nacheinander durchlaufen werden können.

Derartige Fertigungslinien sind bei der Anmelderin im Gebrauch und werden von der Firma Sabatier S.A.S., 31, 2nd Avenue, FR 13127 Vitrolles, Frankreich, unter der Bezeichnung "BODYPACK" oder "SQUAREPACK" angeboten.

Muss eine derartige Anlage auf eine andere Nenngröße von Gebinden umgebaut werden, so sind hierbei Umrüstzeiten in der Größenordnung von einer gesamten Schicht oder mehr notwendig. Während dieser Zeit steht die Fertigungslinie, so dass sich hohe Ausfallkosten ergeben. Ein solches Umrüsten ist daher nur, wenn überhaupt, bei sehr hohen Losgrößen sinnvoll.

Dagegen ist ein Umbau einer Fertigungslinie von Rundgebinden auf quaderförmige Gebinde und umgekehrt grundsätzlich nicht möglich. Vielmehr sind hierzu entsprechend ausgelegte unterschiedliche Fertigungslinien notwendig.

Der Erfindung liegt somit die Aufgabe zugrunde, ein Verfahren zur Herstellung von Blechgebinden anzugeben, womit eine flexible Fertigung von Gebinden unterschiedlicher Größe und auch unterschiedlicher Form ermöglicht wird. Die Rüstzeiten zum Umbau einer Fertigungslinie sollen hierbei gegenüber dem Stand der Technik deutlich reduziert werden und möglichst in der Größenordnung von nur wenigen Stunden liegen.

Die Aufgabe der Erfindung wird erfindungsgemäß durch ein Verfahren zur Herstellung von Blechgebinden, insbesondere aus Feinstblech, gelöst, bei dem eine Basiseinheit, die zur Aufnahme einer Mehrzahl von austauschbaren, extern voreinstellbare und vorjustierbare Bearbeitungsmodulen mit eigenständigem Antrieb ausgebildet ist, mit Modulen für eine bestimmte Nenngröße und eine bestimmte Form von Gebinden bestückt wird, und bei dem zum Umrüsten zwischen verschiedenen Größen oder Formen von Gebinden die Module ausgetauscht werden, wobei der Transport von Gebinden zwischen den verschiedenen Modulen durch eine Transporteinrichtung an der Basiseinheit bewirkt wird, während die Bearbeitung von Gebinden auf den Modulen erfolgt, und bei dem die Module auf die jeweilige Form und Nenngröße eines Gebindes extern vorjustiert und voreingestellt werden, bevor bei einem Umrüsten auf eine unterschiedliche Form oder Größe von Gebinden eine Endjustierung erfolgt.

Die Aufgabe der Erfindung wird auf diese Weise vollkommen gelöst.

Erfindungsgemäß wird dadurch, dass die einzelnen Blechbearbeitungseinheiten, die zur Ausführung von Blechbearbeitungsschritten erforderlich sind, als austauschbare, extern voreinstellbare und justierbare Module ausgebildet sind, die mit einem eigenständigen Werkzeugsatz und einem eigenständigen Antrieb ausgebildet sind, eine hohe Flexibilität beim Betrieb der Fertigungslinie ermöglicht. An der Basiseinheit sind die notwendigen Elemente vorgesehen, um eine lagegerechte Aufnahme der Module zu gewährleisten und um Transport und Führungsfunktionen der Gebinde zwischen den einzelnen Modulen bereitzustellen.

Auf diese Weise können in einer Fertigungslinie sowohl unterschiedliche Normgrößen eines Gebindes gefertigt werden, als auch ein Umbau zwischen Rundgebinden und quaderförmigen Gebinden ermöglicht werden. Die hierzu notwendigen Rüstzeiten liegen in der Größenordnung von lediglich zwei Stunden. Die einzelnen Module enthalten komplett voreingestellte Werkzeugsätze mit zugehörigem Antrieb für jeweils einen Blechbearbeitungsschritt, also insbesondere Expandieren, Bördeln, Bordieren, Falzen oder Sicken, oder Sonderprozesse, wie z.B. Schweißen. Die einzelnen Module werden extern außerhalb der Vorrichtung voreingestellt und vorjustiert, so dass das eigentliche Rüsten nur den Austausch der Module beinhaltet und gegebenenfalls eine Feinjustierung.

Aus der DE 197 29 369 C2 sind zwar eine Vorrichtung und ein Verfahren für die Bearbeitung von Werkstücken bekannt, wobei ein Basismodul vorgesehen ist, in das verschiedene Prozessmodule einsetzbar sind. Dabei beinhaltet das Basismodul eine Transporteinrichtung zum Transport von Werkstücken zwischen den Prozessmodulen. Die Prozessmodule sind über Steckverbindungen mit dem Basismodul koppelbar. In einer derartigen Bearbeitungseinrichtung werden Kleinteile wie z.B. Handy-Gehäuse teilweise manuell und teilweise automatisch bearbeitet.

Hierdurch ist die Erfindung jedoch nicht nahe gelegt, da sich die bekannte Vorrichtung und das bekannte Verfahren auf eine flexible Bearbeitung von Kleinteilen beziehen. Eine Übertragung auf eine Anlage zur Blechbearbeitung ist nicht nahe liegend, da eine Anlage zur Blechbearbeitung Bearbeitungseinheiten mit erheblichen Massen erfordert, die in der Regel jeweils mehrere hundert Kilogramm wiegen.

Die austauschbaren Module können sogar ein Gewicht von mindestens 300 kg, insbesondere von mindestens 500 kg, insbesondere von mindestens 1000 kg aufweisen.

Gemäß einer weiteren Ausführung der Erfindung wird daher eine Hubeinrichtung zur Bewegung der austauschbaren Module verwendet. Hierbei kann es sich beispielsweise um eine Krahnbahn handeln.

In bevorzugter Weiterbildung der Erfindung wird eine Basiseinheit verwendet, bei der mindestens einem Aufnahmeplatz für ein Modul, vorzugsweise allen Aufnahmeplätzen, eine Einrichtung zur Höhenverstellung zugeordnet wird.

Durch die Verwendung von Einrichtungen zur Höhenverstellung der Module an ihren Aufnahmeplätzen wird die Flexibilität der Anlage weiter verbessert und eine einfache Anpassung an unterschiedliche Nenngrößen ermöglicht.

Gemäß einer weiteren Ausgestaltung der Erfindung wird eine Transporteinrichtung an der Basiseinheit mit einer Führungseinrichtung zur Führung von Gebinden verwendet.

Hierbei sind vorzugsweise Mittel zur Einstellung auf unterschiedliche Gebindearten und -größen vorgesehen.

Hierzu ist gemäß einer weiteren vorteilhaften Ausführung der Erfindung eine austauschbare Transferschiene zur Führung von Gebinden vorgesehen.

Soll die Vorrichtung auf eine andere Form oder Größe von Gebinden umgerüstet werden, so ergibt sich ein besonders einfaches Umrüsten für die Transporteinrichtung, indem beispielsweise lediglich die Transferschiene komplett ausgetauscht wird.

Gemäß einer weiteren Ausgestaltung der Erfindung wird jedem Aufnahmeplatz an der Basiseinheit eine Hubeinrichtung zur Bewegung eines Gebindes zwischen der Transporteinrichtung und einem Modul zugeordnet.

Auf diese Weise ist eine einfache Übergabe von Gebinden zwischen der Transporteinrichtung und einem jeweiligen Modul, das an einem Aufnahmeplatz aufgenommen ist, gewährleistet.

Gemäß einer weiteren Ausgestaltung der Erfindung wird an der Basiseinheit mindestens eine Wendeeinrichtung zum Verschwenken eines Gebindes um 180° vorgesehen.

Auf diese Weise können der Deckelbereich und der Bodenbereich eines Gebindes nacheinander an aufeinander folgenden Modulen bearbeitet werden, wobei jeweils die Zuführung in das Modul von unten erfolgt.

Gemäß einer weiteren Ausgestaltung der Erfindung werden den Aufnahmeplätzen Positionierelemente zur Positionierung von Modulen zugeordnet.

Auf diese Weise kann eine genaue Positionierung von Modulen an den vorgesehenen Aufnahmeplätzen erzielt werden, wodurch eine externe Vorjustierung der betreffenden Module sinnvoll umgesetzt und in das Gesamtsystem übernommen werden kann. Auf diese Weise sind nach dem Einbau der Module für ein bestimmtes Gebinde lediglich noch Fein Justierungen erforderlich.

Gemäß einer weiteren Ausgestaltung der Erfindung werden an der Basiseinheit Kupplungselemente vorgesehen, die mit zugeordneten Kupplungselementen an den Modulen koppelbar sind.

Auf diese Weise kann beim Einsetzen eines Moduls an einen jeweiligen Aufnahmeplatz gleichzeitig auch die notwendige Anbindung sämtlicher Versorgungsleitungen und Steuerleitungen an die Basiseinrichtung erreicht werden.

Gemäß einer weiteren Ausgestaltung der Erfindung wird mindestens ein Modul zur Ausführung mehrerer Blechbearbeitungsschritte ausgebildet, insbesondere zur Ausführung von zwei oder drei aufeinander folgenden Blechbearbeitungsschritten.

Diese Maßnahme hat den Vorteil, dass verschiedene Blechbearbeitungsschritte, die immer miteinander gekoppelt sind, besonders rationell auf einem Doppelmodul oder Dreifachmodul miteinander kombiniert werden können, so dass Umrüstarbeiten weiter reduziert werden.

Um eine externe Voreinstellung der Module auf die jeweilige Form oder Größe eines bestimmten Gebindes zu ermöglichen, weisen die Module vorzugsweise Werkzeugsätze auf, die auf die Form oder Größe eines bestimmten Gebindes einstellbar sind, wobei die Basiseinheit ferner vorteilhaft zum Umrüsten der Vorrichtung zwischen Rundgebinden und rechteckigen Gebinden, wie Kanistern, Hobbocks, Eimern oder Dosen ausgebildet ist.

Ferner wird die Basiseinheit vorteilhaft zum Umrüsten zwischen verschiedenen Nenngrößen von Gebinden ausgebildet.

Gemäß einer weiteren Ausgestaltung der Erfindung wird die Basiseinheit zur Aufnahme mindestens zweier Module zur zeitlich parallelen Durchführung eines Bearbeitungsschrittes ausgebildet.

Hierdurch kann eine bessere Gesamtauslastung bzw. Verkürzung der Gesamtdurchlaufzeit bei Bearbeitungsschritten gewährleistet werden, die deutlich höhere Zeit erfordern als die übrigen Bearbeitungsschritte. Auf diese Weise kann die Gesamtdurchlaufzeit weiter reduziert werden.

Hierzu können zwei oder mehr zueinander parallel angeordnete Basiseinheiten vorgesehen sein, die in Querrichtung miteinander koppelbar sind.

Ein Bearbeitungsmodul, das in die Vorrichtung einsetzbar ist, weist einen eigenen Antrieb zum Antrieb eines Werkzeugsatzes zur Blechbearbeitung auf und ist mit Positionierelementen zur Positionierung des Moduls beim Einsetzen in die Basiseinheit ausgebildet.

Auf diese Weise ergibt sich eine optimale Anpassung zwischen jedem Bearbeitungsmodul und der zugehörigen Basiseinheit.

Hierbei erfolgt ferner vorzugsweise eine Ankopplung eines Bearbeitungsmoduls an die Basiseinheit über Kupplungselemente. Hierzu ist an dem jeweiligen Bearbeitungsmodul mindestens ein Kupplungselement vorgesehen, das beim Einsetzen an dem Aufnahmeplatz der Basiseinheit entweder automatisch oder von Hand mit einem zugeordneten Kupplungselement an der Basiseinheit verbunden wird.

Bei den Blechbearbeitungsvorgängen handelt es sich zum Großen Teil um Umformvorgänge. Insbesondere ist meist ein Werkzeugsatz für ein Bördeln und ein Werkzeugsatz für ein Falzen (Verschließvorgang) erforderlich. Vorteilhaft werden diese beiden Werkzeugsätze auf einem austauschbaren Modul miteinander kombiniert.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine schematische, stark vereinfachte Darstellung einer beispielhaften Ausführung einer erfindungsgemäßen Vorrichtung;
- Fig. 2: einen Querschnitt durch die Basiseinheit in stark vereinfachter Darstellung;
- Fig. 3: einen vereinfachten Querschnitt durch die Transporteinrichtung; und
- Fig. 4: eine schematische Darstellung einer leicht gegenüber Fig. 1 abgewandelten Ausführungsform einer erfindungsgemäßen Vorrichtung.

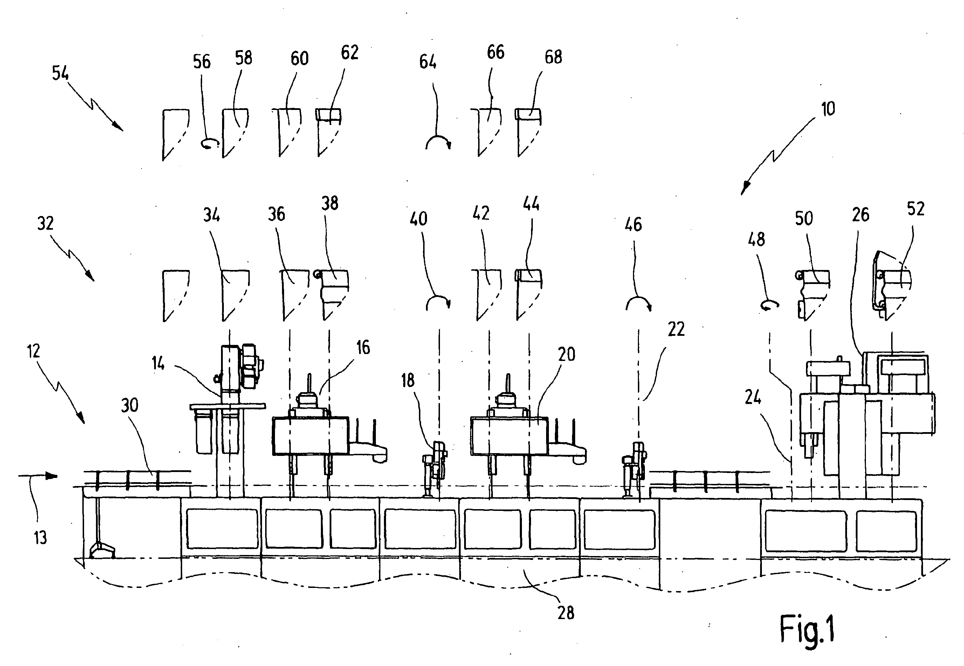

In Fig. 1 ist eine Vorrichtung zur Durchführung des erfindungsgemäßen Verfahren schematisch dargestellt und insgesamt mit der Ziffer 10 bezeichnet.

Die Vorrichtung 10 ist beispielhaft zur Herstellung von konischen Rundgebinden aus Weißblech mit einem Durchmesser von 185 mm (Deckeldurchmesser) bzw. 173 mm (Boden-Durchmesser) und zur Herstellung von quaderförmigen Gebinden aus Weißblech mit 164mm x 125 mm dargestellt.

Die Vorrichtung 10 weist eine Basiseinheit 12 auf, die sich über die gesamte Länge der Vorrichtung erstreckt und die auf einem Fundament 28 gehalten ist. Die Basiseinheit 12 besitzt beispielsweise eine Gesamtlänge von 12,6 m. Die Basiseinheit 12 weist eine Transporteinrichtung 30 zum Transport von Gebinden bzw. halbfertigen Gebinden entlang einer Mehrzahl von Bearbeitungseinrichtungen auf, die entlang der Basiseinheit 12 hintereinander angeordnet sind. Mit 14 ist eine erste Bearbeitungseinrichtung schematisch dargestellt, die zum Expandieren eines mittels der Transporteinrichtung 30 zugeführten zylindrischen Rohteils dient. Diese Bearbeitungseinrichtung 14, wie auch die nachfolgenden Bearbeitungseinrichtungen 16, 20, 24, sind als austauschbare Module ausgebildet, die jeweils mit einem eigenen Werkzeugsatz zur Ausführung eines Blechbearbeitungsschrittes ausgebildet sind, der mit einem eigenen Antrieb versehen ist.

An das erste Modul 14, das zum Expandieren dient, schließt sich ein zweites Modul 16 zum Bördeln und Bordieren bzw. Falzen an. Auf das zweite Modul 16 folgt eine Wendeeinrichtung 18, mit der die Gebinde um 180° verschwenkt werden können. Hieran schließt sich ein weiteres Bearbeitungsmodul 20 an, das zum Bördeln, Bordieren und zum Falzen ausgebildet sein kann. Hierauf folgt wiederum eine Wendeeinrichtung 22. Die Wendeeinrichtung 22 ist schließlich über die Transporteinrichtung 30 mit einem weiteren Bearbeitungsmodul 26 verbunden, das zum Aufschweißen von Ösen und zum Befestigen von Bügeln an den Ösen dient.

Die Basiseinheit 12 ist so ausgebildet, dass nacheinander eine ausreichend große Anzahl von Aufnahmeplätzen vorgesehen ist, die zur Aufnahme von austauschbaren Modulen ausgebildet sind, so dass die Vorrichtung durch den Austausch der Module und eine geeignete Anpassung der Transporteinrichtung innerhalb kurzer Zeit umgerüstet werden kann, so dass verschiedene Normgrößen und/oder Formen eines Gebindes bearbeitet werden können.

Eine Einrichtung der Vorrichtung 10 zur Herstellung von Rundgebinden mit einem oberen Durchmesser von 185 mm und einem unteren Durchmesser von 173 mm ist unter schematischer Andeutung der jeweiligen Verarbeitungsschritte bei 32 dargestellt. Bei der Herstellung der Rundgebinde 32 werden die über die Transporteinrichtung 30 zugeführten zylindrischen Rohlinge zunächst am Modul 14 expandiert, wie schematisch durch den Schritt 34 (Expandieren) dargestellt ist.

Von hier aus erfolgt ein Transport der expandierten Produkte mit Hilfe der Transporteinrichtung 30 in Richtung des Hauptmaterialflusses 13 zum nachfolgenden Modul 16. Das Modul 16 ist als Doppelmodul ausgebildet, auf dem zwei aufeinanderfolgende Blechbearbeitungsvorgänge zusammengefasst sind, nämlich zunächst ein Bördeln 36, das von einem Bordieren 38 am nachfolgenden Teil des Moduls 16 gefolgt ist. Nach Verlassen des Moduls 16 werden die Gebinde mittels der Transporteinrichtung 30 zu der nachgeordneten Wendeeinrichtung 18 überführt und hier um 180° verschwenkt, wie durch den Pfeil 40 angedeutet ist. Anschließend gelangen die Gebinde zu einem wiederum als Doppelmodul ausgebildeten Modul 20, an dem wiederum ein Bördelschritt 42 und ein nachfolgendes Falzen (Verschließen des Bodens) erfolgt.

Danach gelangen die Rundgebinde zu der Wendeeinrichtung 22 und werden dort wieder um 180° verschwenkt, wie durch den Pfeil 46 angedeutet ist. Schließlich erfolgt eine Überführung zu dem nachgeordneten Modul 26, um Ösen aufzuschweißen und Henkel in die eingeschweißten Ösen einzusetzen. Hierzu erfolgt zunächst eine Indexierung 48, anschließend im ersten Teil des Moduls ein Aufschweißen von Ösen auf gegenüberliegenden Seiten und schließlich ein Einsetzen von Henkeln in die zuvor aufgeschweißten Ösen am zweiten Teil des Moduls, wie durch 52 angedeutet ist.

Mit 54 ist oberhalb der Verarbeitungsschritte für die Rundgebinde 32 eine Verwendung der Vorrichtung 10 zur Herstellung von Kanistern 54 einer Größe von 164 mm x 125 mm angedeutet.

Um hierzu eine Umrüstung zu ermöglichen, werden die Module 14, 16, 20 gegen entsprechende Module, die mit geeigneten vorjustierten Werkzeugsätzen für die geänderten Bearbeitungsoperationen ausgestattet sind, ausgewechselt. Das Modul 26 wird für diesen Fall entfernt, da es für die Kanisterherstellung nicht benötigt wird.

Der erste Bearbeitungsschritt bei der Herstellung von Kanistern 54 beginnt mit einem Indexieren gemäß Ziffer 56. Hieran schließt sich ein Expandieren an, das mit 58 angedeutet ist. Am nachfolgenden Modul 16 erfolgt ein Bördeln und ein Falzen (Verschließen) des Bodens. Nach einem Wendeschritt (Ziffer 64) schließt sich Wiederum ein Bördeln und Falzen (Verschließen des Deckels) am nachfolgenden Modul 20 an.

Auf diese Weise können auf der selben Vorrichtung 12 lediglich nach Austausch der notwendigen Bearbeitungsmodule wahlweise entweder Rundgebinde oder rechteckige Kanister hergestellt werden.

Es versteht sich, dass für die betreffenden Module neben der Vorrichtung bzw. in geeigneter räumlicher Zuordnung ein geeignetes Lager vorgesehen ist. Darin werden verschiedene Bearbeitungsmodule bereitgehalten, um für den Fall eines Umrüstens in die Vorrichtung 10 eingesetzt zu werden. Ausgetauschte Module werden im Lager aufgenommen.

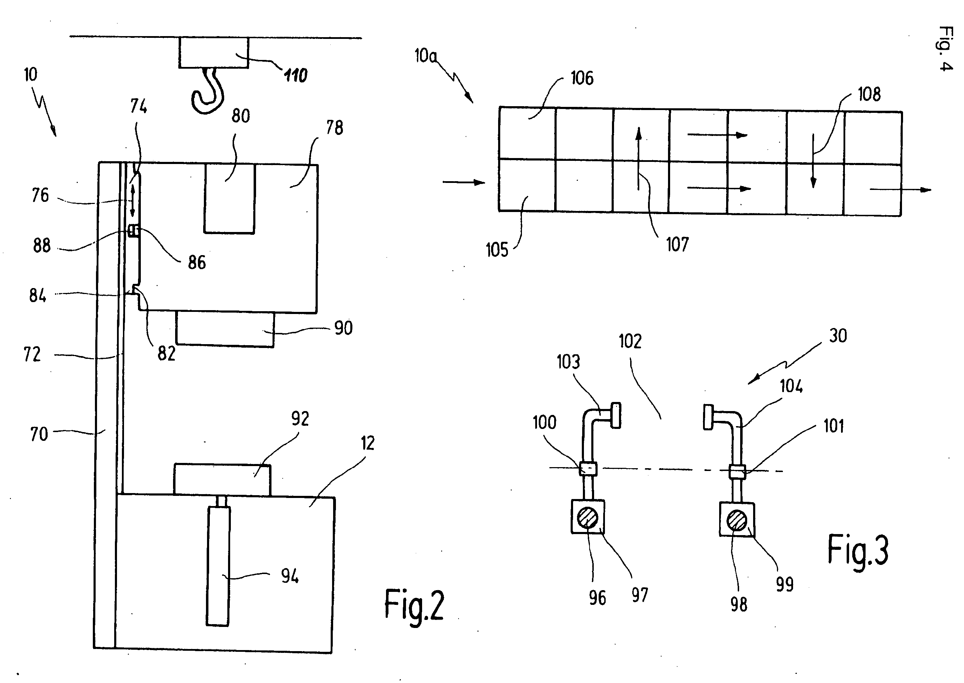

Aus Fig. 2 ist der Aufbau der Basiseinheit 12 und eines daran aufgenommenen Bearbeitungsmoduls 78 näher ersichtlich. Die Basiseinheit 12 besitzt einen rückwärtigen, ausreichend steifen Rahmen 70, an dem an einem jeweiligen Aufnahmeplatz für ein Modul 78 eine Vertikalführung 72 vorgesehen ist. An der Führung 72 ist ein Schlitten 74 mittels eines geeigneten Antriebes (nicht dargestellt) in Vertikalrichtung verfahrbar, wie durch den Doppelpfeil 76 angedeutet ist. Der Schlitten 74 bildet einen Aufnahmeplatz, an dem ein Modul 78 befestigt werden kann. Das Modul 78 steht vom Schlitten 74 bzw. dem Rahmen 70 aus nach außen hervor. Gegenüber dem Modul 78 ist im unteren Bereich der Basiseinheit 12 eine Hubeinrichtung 92 vorgesehen, um Gebinde, die von der Transporteinrichtung 30 herangeführt werden (nicht dargestellt), zum darüber angeordneten Modul 78 zur Bearbeitung übergeben zu können. Zusammen mit einem am oberen Ende aufgenommenen Modul 78 bildet so die Basiseinheit 12 eine Einheit in Form eines C-förmigen Maschinengestells. Zur Betätigung der Hubeinrichtung 92 kann beispielsweise ein Pneumatikzylinder 94 oder eine motorische Achse vorgesehen sein.

Das Modul 78 weist an seinem unteren Ende einen Werkzeugsatz 90 auf, der zur Ausführung eines Blechbearbeitungsschrittes, wie etwa Expandieren, Bördeln, Bordieren, Falzen oder Sicken, ausgebildet ist und der von einem mit 80 angedeuteten Antrieb auf dem Modul 78 angetrieben wird.

Um beim Austausch eines Moduls 78 eine präzise Positionierung am Schlitten 74 der Basiseinheit 12 zu gewährleisten, kann, wie durch 82 angedeutet ist, am Modul 78 eine Mehrzahl von Positionierelementen 82 vorgesehen sein, denen entsprechend geformte Positionierelemente 84 am Schlitten 74 zugeordnet sind. So kann eine lagegerechte Aufnahme des Moduls 78 am Schlitten 74 gewährleistet werden. Zusätzlich kann am Modul 78 ein Kupplungselement 86 vorgesehen sein, dem ein geeignet geformtes Kupplungselement 88 am Schlitten 74 zugeordnet ist. Gegebenenfalls können die Kupplungselemente 86, 88 derart ausgebildet sein, dass mit der korrekten Positionierung an den Positionierelementen 82, 84 auch gleichzeitig die Kupplungsverbindung 86, 88 geschlossen wird.

In Fig. 3 ist schematisch die Transporteinrichtung 30 dargestellt, die den Transport der Gebinde zwischen den einzelnen Modulen der Vorrichtung 10 übernimmt. Die Transporteinrichtung 30 weist eine Kurvensteuerung mit zwei Kurvenstangen 96, 98 auf, entlang derer Reiter 97, 99 verfahrbar sind. An den Reitern 97, 99 sind Aufnahmen 100 bzw. 101 befestigt. An diesen Aufnahmen 100, 101 kann eine insgesamt mit 102 bezeichnete Transferschiene auswechselbar befestigt werden. Die Transferschiene 102 weist eine linke Hälfte 103 und eine rechte Hälfte 104 auf, an denen jeweils Greiferelemente gehalten sind. Im Betrieb bewegt sich beide Hälften 103, 104 im Maschinentakt synchron vor und zurück, um die Gebinde taktweise zu bewegen. Am jeweiligen Ende eines Taktes bewegen sich beide Hälften 103, 104 auseinander, um die Gebinde freizugeben.

Soll die Vorrichtung 10 umgerüstet werden, so wird vorzugsweise die gesamte Transferschiene 102 ausgetauscht, wodurch ein einfaches Umrüsten der Transporteinrichtung 30 auf unterschiedliche Gebinde ermöglicht ist.

In Fig. 4 ist eine abgewandelte Ausführung einer erfindungsgemäßen Vorrichtung äußerst schematisch dargestellt und insgesamt mit der Ziffer 10a bezeichnet. Der Unterschied zu der zuvor anhand von Fig. 1 erläuterten Vorrichtung 10 besteht darin, dass hier parallel zueinander zwei Basiseinheiten 105, 106 angeordnet sind, zwischen denen ein Transport in Querrichtung ermöglicht ist, wie durch die Pfeile 107, 108 angedeutet ist. So kann ein Bearbeitungsvorgang, der eine deutlich höhere Zeit als die übrigen Bearbeitungsvorgänge erfordert, gleichzeitig auf einem Modul an der einen Basiseinheit 105 und auf einem parallelen Modul an der anderen Basiseinheit 106 durchgeführt werden, wodurch die Taktzeit entsprechend verringert werden kann.

Wie am Beispiel der Vorrichtung 10 gemäß Fig. 1 dargestellt wurde, wird der Bearbeitungsschritt Expandieren an einem eigenen Modul 14 durchgeführt, während die Bearbeitungsvorgänge Bordieren, Bördeln und Falzen jeweils an austauschbaren Doppelmodulen 16 bzw. 20 zusammengefasst sind.

Es versteht sich, dass natürlich beliebige andere Kombinationen von Modulen und sinnvolle Zusammenfassungen von Einzelbearbeitungsvorgängen möglich sind.

Die verschiedenen möglichen Nenngrößen und Formen für Rundgebinde und rechteckförmige Gebinde werden sinnvollerweise auf verschiedene Grundgrößen von Basiseinheiten 12 aufgeteilt, die jeweils wieder für bestimmte Bandbreiten von Bearbeitungsmodulen ausgelegt sind. So kann etwa mit vier Größen von Basiseinheiten 12 der gesamte Nenngrößenbereich von 56 mm Durchmesser bei Rundgebinden bis zu 328/312 mm Durchmesser bei Rundgebinden bzw. vom rechteckigen Format 106 mm x 76 mm bis 292 mm x 258 mm abgedeckt werden.

## Patentansprüche

1. Verfahren zur Herstellung von Blechgebinden, insbesondere aus Feinstblech, bei dem eine Basiseinheit (12, 105, 106), die zur Aufnahme einer Mehrzahl von austauschbaren Bearbeitungsmodulen mit eigenständigern Antrieb ausgebildet ist, mit Modulen (14, 16, 20, 26, 78) für eine bestimmte Nenngröße und eine bestimmte Form von Gebinden bestückt wird, wobei der Transport von Gebinden zwischen den verschiedenen Modulen (14, 16, 20, 26, 78) durch eine Transporteinrichtung an der Basiseinheit (12, 105, 106) bewirkt wird, während die Bearbeitung von Gebinden auf den Modulen (14, 16, 20, 26, 78) erfolgt, **dadurch gekennzeichnet, dass** zum Umrüsten zwischen verschiedenen Größen oder Formen von Gebinden die Module (14, 16, 20, 26, 78) ausgetauscht werden, und dass die Module (14, 16, 20, 26, 78) auf die jeweilige Form und Nenngröße eines Gebindes extern vorjustiert und voreingestellt werden, bevor bei einem Umrüsten auf eine unterschiedliche Form oder Größe von Gebinden eine Endjustierung erfolgt.

2. Verfahren nach Anspruch 1, **dadurch gekennzeichnet, dass** die austauschbare Module (14, 16, 20, 26, 78) die verwendet werden, ein Gewicht von mindestens 300 kg, insbesondere von mindestens 500 kg, insbesondere von mindestens 1000kg, aufweisen.

3. Verfahren nach Anspruch 2, **dadurch gekennzeichnet, dass** eine Hubeinrichtung zur Bewegung der austauschbaren Module (14, 16, 20, 26, 78) verwendet wird.

4. Verfahren nach Anspruch 2 oder 3, **dadurch gekennzeichnet, dass** an der Basiseinheit (12, 105, 106) mindestens einem Aufnahmeplatz, dass eine Mehrzahl von Blechbearbeitungseinheiten, die jeweils zur Ausführung eines Blechbearbeitungsschrittes wie etwa Expandieren, Bördeln, Bordieren, Falzen oder Sicken, Verwendet werden, wobei zumindest einige der Blechbearbeitungseinheiten als austauschbare Module (14, 16, 20, 26, 78) ausgebildet sind, die einen Werkzeugsatz (90) mit einem eigenständigen Antrieb (80) zur Blechbearbeitung aufweisen, dass die Basiseinheit (12, 105, 106) mit einer Mehrzahl von Aufnahmeplätzen zur Aufnahme der Module (14, 16, 20, 26, 78) vorgesehen ist, und vorzugsweise allen Aufnahmeplätzen, eine Einrichtung zur Höhenverstellung zugeordnet wird.

5. Verfahren nach einem der vorhergehenden Ansprüche 2-4, **dadurch gekennzeichnet, dass** eine Transporteinrichtung (30) an der Basiseinheit (12, 105, 106) verwendet wird, die eine Führungseinrichtung zur Führung von Gebinden aufweist.

6. Verfahren nach Anspruch 5, **dadurch gekennzeichnet, dass** eine Transporteinrichtung (30) verwendet wird, die Mittel zur Einstellung auf unterschiedliche Gebindearten und -größen aufweist.

7. Verfahren nach Anspruch 6, **dadurch gekennzeichnet, dass** eine Transporteinrichtung (30) verwendet wird, die eine austauschbare Transferschiene (102) zur Führung von Gebinden aufweist.

8. Verfahren nach einem der vorhergehenden Ansprüche 2-7, **dadurch gekennzeichnet, dass** jedem Aufnahmeplatz an der Basiseinheit (12, 105, 106) eine Hubeinrichtung (92) zur Bewegung eines Gebindes zwischen der Transporteinrichtung (30) und einem Modul (14, 16, 20, 26, 78) zugeordnet wird.

9. Verfahren nach einem der vorhergehenden Ansprüche 2-8, **dadurch gekennzeichnet, dass** an der Basiseinheit (12, 105, 106) mindestens eine Wendeeinrichtung (18, 22) zum Verschwenken eines Gebindes verwendet wird.

10. Verfahren nach einem der vorhergehenden Ansprüche 2-9, **dadurch gekennzeichnet, dass** den Aufnahmeplätzen Positionierelemente (84) zur Positionierung von Modulen (14, 16, 20, 26, 78) zugeordnet werden.

11. Verfahren nach einem der vorhergehenden Ansprüche 2-10, **dadurch gekennzeichnet, dass** an der Basiseinheit (12, 105, 106) Kupplungselemente (88) vorgesehen werden, die mit zugeordneten Kupplungselementen (86) an den Modulen (14, 16, 20, 26, 78) gekoppelt werden.

12. Verfahren nach einem der vorhergehenden Ansprüche 2-11, **dadurch gekennzeichnet, dass** mindestens ein Modul (16, 20, 26) verwendet wird, das zur Ausführung mehrerer Blechbearbeitungsschritte ausgebildet ist, insbesondere zur Ausführung von zwei oder drei aufeinander folgenden Blechbearbeitungsschritten.

13. Verfahren nach einem der vorhergehenden Ansprüche 2-12, **dadurch gekennzeichnet, dass** die Module (14, 16, 20, 26, 78) verwendet werden, die Werkzeugsätze (90) aufweisen, die auf die Form oder Grösse eines bestimmten Gebindes einstellt werden.

14. Verfahren nach einem der vorhergehenden Ansprüche 2-13, **dadurch gekennzeichnet, dass** mindestens ein Werkzeugsatz (90) für einen Umformvorgang auf einem austauschbaren Modul (14, 16, 20, 26, 78) vorgesehen wird.

15. Verfahren nach einem der vorhergehenden Ansprüche 2-14, **dadurch gekennzeichnet, dass** mindestens ein Werkzeugsatz (90) für den Blechbearbeitungsvorgang Bördeln und mindestens ein Werkzeugsatz (90) für den Blechbearbeitungsvorgang Falzen vorgesehen wird, die vorzugsweise auf einem austauschbaren Modul kombiniert (16, 20, 26) werden.

16. Verfahren nach einem der vorhergehenden Ansprüche 2-15, **dadurch gekennzeichnet, dass** eine Basiseinheit (12, 105, 106) verwendet wird, die zum Umrüsten zwischen Rundgebinden und rechteckigen Gebinden, wie Kanistern oder Hobbocks, ausgebildet ist.

17. Verfahren nach einem der vorhergehenden Ansprüche 2-16, **dadurch gekennzeichnet, dass** eine Basiseinheit (12, 105, 106) verwendet wird, die zum Umrüsten zwischen verschiedenen Nenngrößen von Gebinden ausgebildet ist.

18. Verfahren nach einem der vorhergehenden Ansprüche 2-17, **dadurch gekennzeichnet, dass** eine Basiseinheit (12, 105, 106) verwendet wird, die zur Aufnahme mindestens zweier Module (14, 16, 20, 26, 78) zur zeitlich parallelen Durchführung eines Bearbeitungsschrittes ausgebildet ist.

19. Verfahren nach Anspruch 18, **dadurch gekennzeichnet, dass** mindestens zwei zueinander parallel angeordnete Basiseinheiten (105, 106) verwendet werden, die in Querrichtung miteinander koppelbar sind.

## Claims

1. A method of manufacturing tin parts, in particular made of thin sheet, wherein a base unit (12, 105, 106) being configured for receiving a plurality of exchangeable processing modules having an independent drive, is supplied for a particular nominal size and a particular shape of trusses, wherein the transportation of trusses between the various modules (14, 16, 20, 26, 78) is performed by a transport device on the base unit (12, 105, 106), while the processing of trusses is performed on the modules (14, 16, 20, 26, 78), **characterized in that** for reconfiguring between different sizes and shapes of trusses the modules (14, 16, 20, 26, 78) are exchanged, and **in that** the modules (14, 16, 20, 26, 28) are externally pre-adjusted for the particular shape and nominal size of each truss, before a final adjusting is done during reconfiguring to different shapes or nominal sizes of trusses.

2. The method of claim 1, **characterized in that** a plurality of tin processing units are used which are each utilized for performing a tin processing step, such as expanding, crimping, edging, folding, or creasing, wherein at least some of the tin processing units are configured as exchangeable modules (14, 16, 20, 26, 78) each having a set of tools (90) including an individual drive (80) for tin processing, **in that** the base unit (12, 105, 106) is provided with a plurality of receiving places for receiving the modules (14, 16, 20, 26, 78), and **in that** the exchangeable modules (14, 16, 20, 26, 78) that are utilized have a weight of at least 300 kg, in particular of at least 500 kg, more particularly of at least 1000 kg.

3. The method of claim 2, **characterized in that** a lifting device is utilized for moving the exchangeable modules (14, 16, 20, 26, 78).

4. The method of claim 2 or 3, **characterized in that** on the base unit (12, 105, 106) at least one receiving place, preferably all receiving places, are supplied with a height-adjusting means.

5. The method of any of claims 2 to 4, **characterized in that** a transport device (30) is utilized on the base unit (12, 105, 106) having a guide means for guiding trusses.

6. The method of claim 5, **characterized in that** a transport device (30) is utilized having means for adjusting for different truss types and sizes.

7. The method of claim 6, **characterized in that** a transport device 30 is utilized having an exchangeable transfer rail (102) for guiding trusses.

8. The method of any of claims 2 to 7, **characterized in that** each receiving place at the base unit (12, 105, 106) is equipped with a lifting means (92) for moving trusses between the transport device (30) and a module (14, 16, 20, 26, 78).

9. The method of any of claims 2 to 8, **characterized in that** on the base units (12, 105, 106) at least one turning means (18, 22) is utilized for pivoting a truss.

10. The method of any of claims 2 to 9, **characterized in that** the receiving places are equipped with positioning elements (84) for positioning modules (14, 16, 20, 26, 78).

11. The method of any of claims 2 to 10, **characterized in that** the base unit (12, 105, 106) is equipped with coupling elements (88) which are coupled with assigned coupling elements (86) on the modules (14, 16, 20, 26, 78).

12. The method of any of claims 2 to 11, **characterized in that** at least one module (16, 20, 26) is utilized which is configured for performing different tin processing operations, in particular for performing two or three tin processing operations one after another.

13. The method of any of claims 2 to 12, **characterized in that** the modules (14, 16, 20, 26, 78) which are utilized are equipped with tool sets (90) which are adjusted to the shape or size of a particular truss.

14. The method of any of claims 2 to 13, **characterized in that** at least one tool set (90) is provided for a deforming operation on an exchangeable module (14, 16, 20, 26, 78).

15. The method of any of claims 2 to 14, **characterized in that** at least one tool set (90) is provided for the tin processing operation crimping, and at least one tool set (90) is provided for the tin processing operation folding, both tool sets preferably being combined on one exchangeable module (16, 20, 26).

16. The method of any of claims 2 to 15, **characterized in that** a base unit (12, 105, 106) is utilized which is configured for reconfiguring between circular and rectangular trusses, such as canisters or hobbocks.

17. The method of any of claims 2 to 16, **characterized in that** a base unit (12, 105, 106) is utilized which is configured for reconfiguring between different nominal sizes of trusses.

18. The method of any of claims 2 to 17, **characterized in that** a base unit (12, 105, 106) is utilized which is configured for receiving at least two modules (14, 16, 20, 26, 78) for performing a processing step in parallel.

19. The method of claim 18, **characterized in that** at least two base units (105, 106) arranged in parallel are utilized which can be coupled transversely.

## Revendications

1. Procédé pour fabriquer des récipients en tôle, en particulier en tôle noire, dans lequel une unité de base (12, 105, 106) qui est réalisée pour recevoir une pluralité de modules de traitement interchangeables munis d'un entraînement propre, est équipée de modules (14, 16, 20, 26, 78) pour une taille nominale déterminée et une forme déterminée de récipients, le transport de récipients entre les différents modules (14, 16, 20, 26, 78) étant effectué par un dispositif de transport sur l'unité de base (12, 105, 106), tandis que le traitement des récipients a lieu sur les modules (14, 16, 20, 26, 78), **caractérisé en ce que** pour l'adaptation entre différentes tailles ou formes de récipients, les modules (14, 16, 20, 26, 78) sont remplacés, et **en ce que** les modules (14, 16, 20, 26, 78) sont préajustés et pré-réglés extérieurement à la forme et à la taille nominale respectives d'un récipient, avant d'effectuer un ajustement final dans le cas d'une adaptation à une forme ou une taille de récipients différentes.

2. Procédé selon la revendication 1, **caractérisé en ce qu'**une pluralité d'unités de traitement de tôle sont utilisées à chaque fois pour réaliser une étape de traitement de tôle comme par exemple une expansion, un rabattage, un bordage, un pliage ou une moulure, au moins certaines des unités de traitement de tôle étant réalisées sous forme de modules interchangeables (14, 16, 20, 26, 78) qui présentent un jeu d'outils (90) avec un entraînement autonome (80) pour le traitement de tôle, **en ce que** l'unité de base (12, 105, 106) est pourvue d'une pluralité d'emplacements de réception pour recevoir les modules (14, 16, 20, 26, 78), et **en ce que** les modules interchangeables (14, 16, 20, 26, 78) qui sont utilisés présentent un poids d'au moins 300 kg, en particulier d'au moins 500 kg, tout particulièrement d'au moins 1000 kg.

3. Procédé selon la revendication 2, **caractérisé en ce qu'**un dispositif de levage est utilisé pour déplacer les modules interchangeables (14, 16, 20, 26, 78).

4. Procédé selon la revendication 2 ou 3, **caractérisé en ce qu'**au moins un emplacement de réception, de préférence tous les emplacements de réception, est associé à un dispositif de réglage en hauteur au niveau de l'unité de base (12, 105, 106).

5. Procédé selon l'une quelconque des revendications 2 à 4, **caractérisé en ce qu'**un dispositif de transport (30) est utilisé sur l'unité de base (12, 105, 106), lequel présente un dispositif de guidage pour guider des récipients.

6. Procédé selon la revendication 5, **caractérisé en ce que** l'on utilise un dispositif de transport (30) qui présente des moyens pour l'ajustement à différents types et différentes tailles de récipients.

7. Procédé selon la revendication 6, **caractérisé en ce que** l'on utilise un dispositif de transport (30) qui présente un rail de transfert interchangeable (102) pour le guidage de récipients.

8. Procédé selon l'une quelconque des revendications précédentes 2 à 7, **caractérisé en ce que** l'on associe à chaque emplacement de réception sur l'unité de base (12, 105, 106) un dispositif de levage (92) pour le déplacement d'un récipient entre le dispositif de transport (30) et un module (14, 16, 20, 26, 78).

9. Procédé selon l'une quelconque des revendications précédentes 2 à 8, **caractérisé en ce qu'**au moins un dispositif de retournement (18, 22) est utilisé sur l'unité de base (12, 105, 106) pour faire pivoter un récipient.

10. Procédé selon l'une quelconque des revendications précédentes 2 à 9, **caractérisé en ce que** l'on associe aux emplacements de réception des éléments de positionnement (84) pour le positionnement de modules (14, 16, 20, 26, 78).

11. Procédé selon l'une quelconque des revendications précédentes 2 à 10, **caractérisé en ce que** l'on prévoit sur l'unité de base (12, 105, 106) des éléments d'accouplement (88) qui sont accouplés à des éléments d'accouplement associés (86) sur les modules (14, 16, 20, 26, 78).

12. Procédé selon l'une quelconque des revendications précédentes 2 à 11, **caractérisé en ce qu'**au moins un module (16, 20, 26) est utilisé, lequel est utilisé pour réaliser plusieurs étapes de traitement de tôle, en particulier pour réaliser deux ou trois étapes de traitement de tôle successives.

13. Procédé selon l'une quelconque des revendications précédentes 2 à 12, **caractérisé en ce que** l'on utilise les modules (14, 16, 20, 26, 78), qui présentent des jeux d'outils (90) qui sont ajustés à la forme ou à la taille d'un récipient déterminé.

14. Procédé selon l'une quelconque des revendications précédentes 2 à 13, **caractérisé en ce qu'**au moins un jeu d'outils (90) est prévu pour une opération de mise en forme sur un module interchangeable (14, 16, 20, 26, 78).

15. Procédé selon l'une quelconque des revendications précédentes 2 à 14, **caractérisé en ce qu'**au moins un jeu d'outils (90) est prévu pour l'opération de traitement de tôle de rabattage et au moins un jeu d'outils (90) est prévu pour l'opération de traitement de tôle de pliage, lesquels sont de préférence combinés sur un module interchangeable (16, 20, 26).

16. Procédé selon l'une quelconque des revendications précédentes 2 à 15, **caractérisé en ce que** l'on utilise une unité de base (12, 105, 106) qui est réalisée pour l'adaptation entre des récipients ronds et des récipients rectangulaires, tels que des bidons ou des fûts.

17. Procédé selon l'une quelconque des revendications précédentes 2 à 16, **caractérisé en ce que** l'on utilise une unité de base (12, 105, 106) qui est réalisée pour l'adaptation entre différentes tailles nominales de récipients.

18. Procédé selon l'une quelconque des revendications précédentes 2 à 17, **caractérisé en ce que** l'on utilise une unité de base (12, 105, 106) qui est réalisée pour recevoir au moins deux modules (14, 16, 20, 26, 78) pour réaliser parallèlement dans le temps une étape de traitement.

19. Procédé selon la revendication 18, **caractérisé en ce que** l'on utilise au moins deux unités de base disposées parallèlement l'une à l'autre (105, 106), lesquelles peuvent être accouplées l'une à l'autre dans la direction transversale.
